# EUROPEAN PATENT APPLICATION

(11) **EP 0 648 650 A1**
(43) Date of publication of application: **19.04.1995**
(21) Application number: 93911980.6
(22) Date of filing: 10.05.1993
(51) Int. Cl.: B60R 21/26

(54) **ELECTRIC IGNITION DEVICE FOR GAS GENERATING DEVICE**

(71) Applicant: NIPPON KOKI CO., LTD., Minato-ku, Tokyo 105 (JP)
(72) Inventor: KOBARI, Hirokazu, Shirakawa-shi, Fukushima-ken 961 (JP); MIYAZAKI, Hitoshi, Nishishirakawa-gun, Fukushima-ken 961 (JP); HASEGAWA, Hitoshi, 2-306, Ishikubo Danchi, Nishishirakawa-gun, Fukushima-ken 969-03 (JP)
(74) Representative: Kern, Wolfgang, Dipl.-Ing.
(86) International application number: JP9300605
(87) International publication number: WO9426560

(57) **Abstract**

An electric ignition device for a gas generating device for a life-saving airbag used on an automobile and so forth that is intended to improve the properties of a heating element in a short period of time. An electric ignition device for a gas generating device wherein a pair of electrodes (22) formed of metal film are disposed on the surface of an insulating thin plate (21) at a predetermined interval, and wherein the pair of electrodes are integrally connected to each other by means of at least one heating element (23) formed of metal film, the electric ignition device being characterized in that at least two trimmings (24) cut off in a widthwise direction of the heating element are provided in the heating element.

## Description

### BACKGROUND OF THE INVENTION:

### FIELD OF THE INVENTION:

This invention relates to an electric igniter for a gas generator which is used to inflate a lifesaving air bag installed in automobiles and others.

### DESCRIPTION OF THE PRIOR ART:

As an example of prior electric igniters for a gas generator of lifesaving air bags, one disclosed in Japanese Patent Application Laid-open Print No. 64-75896 has been known.

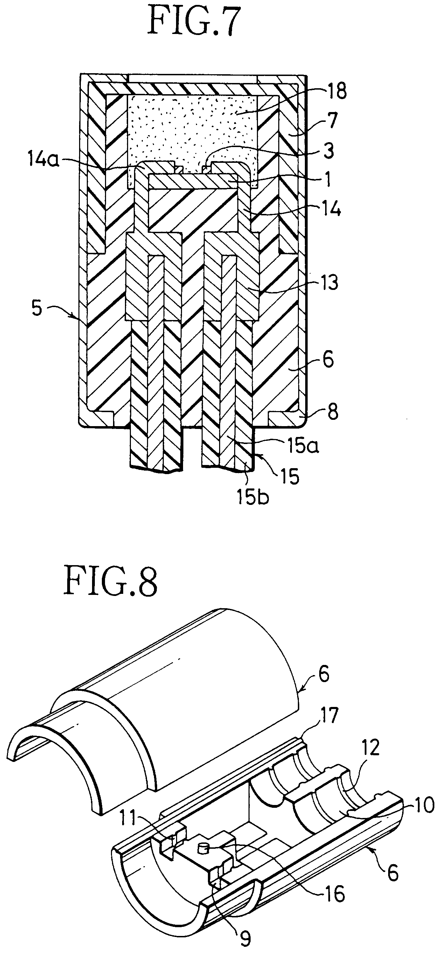

The above electric igniter will be described with reference to Fig. 6 and Fig. 8.

As shown in Fig. 6, an electric igniter 1 for a gas generator comprises a pair of electrodes 3, 3 which are disposed at a certain interval in front and rear of a rectangular ceramic insulating thin plate 2 with a thickness of about 0.6 mm and two heating elements 4, 4 which are disposed between the electrodes 3, 3.

The electrodes 3 and the heating elements 4 are made of nickel chrome, tantalum nitride or other metallic membrane and integrally formed on the top of the insulating thin plate 2.

For example, this electric igniter 1 for a gas generator is produced by the following method.

First, a metallic membrane of about 500 to 5000Å is uniformly deposited on the entire surface of the rectangular ceramic insulating thin plate 2 with a thickness of about 0.6 mm by the sputtering method or the vacuum deposition method. Then, the metallic membrane is subjected to the photo-etching method to leave a required portion and, the electrodes 3 and the heating elements 4 are integrally formed by the metallic membrane.

With reference to Fig. 7 and Fig. 8, an example of fitting the electric igniter 1 for a gas generator configured as described above to an igniting device for a gas generator will be described.

The electric igniter 1 for a gas generator is fitted within a plug 5.

The plug 5 consists of two-pieces divided type plug bodies 6 and a lid 7 and is protected by a plug case 8 made of aluminum, iron or stainless steel, for example.

The plug bodies 6 and the lid 7 are made of an insulating resin such as polyethylene, vinyl chloride or polyphenylene sulphide resin.

On the plug bodies 6, a crimp-style terminal accommodating section 9 and a lead wire accommodating section 10 are formed, and pressing projections 11, 12 are disposed on the crimp-style terminal accommodating section 9 and the lead wire accommodating section 10, respectively. When the plug bodies 6 are joined together, the pressing projections 11, 12 press to fix a projection piece 14 of a crimp-style terminal 13 and a lead wire 15 .

To join the plug bodies 6, a semicircular pillar-shaped fitting piece 16 is formed on one of the plug bodies 6 and a fitting hole (not shown) which fits the semicircular pillar-shaped fitting piece 16 is formed on the other.

Furthermore, a joining projection 17 with a triangle cross section is disposed on one side of each plug body 6 to join the plug bodies 6 together.

And, the joined plug bodies 6 are unified by supersonic waves.

The lead wire 15 consists of a conductor 15a made of a tinned, annealed copper wire and a crosslinked polyethylene coating 15b.

And, the leading end of the conductor 15a of the lead wire 15 is press-bonded to the crimp-style terminal 13 made of oxygen free copper.

At the center of the joined plug bodies 6, the electric igniter for gas generator 1 is disposed as shown in Fig. 7.

The electric igniter 1 for a gas generator has the electrode 3 pressed for fixing by a bent part 14a disposed at the leading end of the projection piece 14 of the crimp-style terminal 13 and has the bent part 14a and the electrode 3 soldered to fix.

And, an igniting agent 18 consisting of, for example, tricinate, lead thiocyanate, potassium chlorate, diazodinitrophenol and barium styphnate is accommodated atop of the electric igniter 1 for a gas generator.

With the igniting device for a gas generator configured as described above, an electric current flows from the lead wire 15 to the heating element 4 with a small surface area via the crimp-style terminal 13 and the electrode 3.

At the heating element 4, the electric current is converted into heat energy to generate heat, the igniting agent 18 disposed atop of the heating element 4 is ignited to fuse the top of the lid 7, and an explosive compound (not shown) is ignited. Ignition of the explosive compound generates gas to instantaneously inflate a lifesaving air bag.

In the above conventional electric igniter 1 for a gas generator, the width of the heating element 4 is reduced in the longitudinal direction so as to make its heat generating performance higher than other parts.

Experiments made by the inventor have confirmed that the heating element can fully exhibit its function by having the width of the heating element 4 reduced in the longitudinal direction.

In the case of an automobile, for example, if the supply of electricity from a battery is stopped because of a collision, a needed power is supplied from a backup capacitor for a certain period.

Therefore, it is desired that the heating element 4 is activated more surely and the gas generator is activated more quickly even if the power supply from the backup capacitor lasts only a short time.

### SUMMARY OF THE INVENTION:

This invention has been completed to comply with the aforementioned desire and its object is to provide an electric igniter for a gas generator which can enhance the characteristics of a heating element in a short time.

This invention, in an electric igniter for a gas generator wherein a pair of electrodes formed of metallic membrane on the surface of an insulating thin plate is disposed at a certain interval and the above electrodes are integrally connected by at least one heating element made of metallic membrane, comprises forming at least two trimmings in the breadth direction of the above heating element.

In this invention, when an electric current is supplied to the heating element, a heat spot which instantaneously reaches a higher temperature than other parts is formed between the trimmings and an igniting agent disposed thereon is ignited faster than other parts.

### BRIEF DESCRIPTION OF THE DRAWINGS:

Fig. 1 is a plan view of an electric igniter for a gas generator according to one embodiment of this invention.
Fig. 2 is an enlarged plan view of the heating element of Fig. 1.
Fig. 3 is an explanatory view showing the measuring conditions of an exothermic temperature of the electric igniter for a gas generator of Fig. 1.
Fig. 4 is a graph showing an exothermic property with the electric igniter for a gas generator according to one embodiment of this invention.
Fig. 5 is a graph showing the ignition time with the electric igniter for a gas generator according to one embodiment of this invention.
Fig. 6 is a plan view showing a conventional electric igniter for a gas generator.
Fig. 7 is a sectional view of the igniting device for a gas generator using a conventional electric igniter for a gas generator.
Fig. 8 is an exploded perspective view of Fig. 7.

### DESCRIPTION OF THE PREFERRED EMBODIMENT OF THE INVENTION:

Embodiments of this invention will be described with reference to the attached drawings.

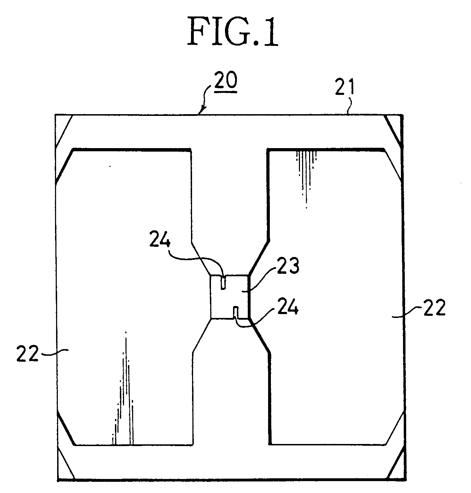

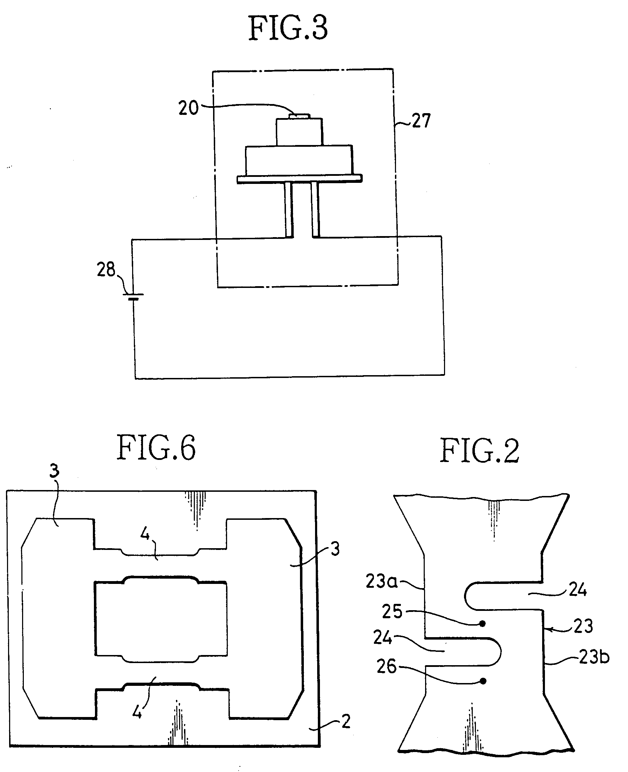

Fig. 1 and Fig. 2 show one example of the electric igniter for a gas generator according to this invention.

An electric igniter 20 for a gas generator is configured by disposing a pair of electrodes 22, 22 at a certain interval in front and rear of a rectangular ceramic insulating thin plate 21 with a thickness of about 0.6 mm and disposing a heating element 23 between the electrodes 22, 22 in the same way as the prior art.

The electrode 22 and the heating element 23 are made of nickel chrome, tantalum nitride, manganin, constantan, advances or other metallic membrane and integrally formed on the top of the insulating thin plate 21.

In this embodiment, two trimmings 24 are formed in the heating element 23 to be mutually parallel from both sides 23a, 23b of the heating element 23 as shown in Fig. 2.

These trimmings 24 are formed by cutting off nearly halfway in the breadth direction of the heating element 23 by means of a laser, for example.

In this embodiment configured as described above, when an electric current is flown to the pair of electrodes 22, 22, a spot 25 between the two trimmings 24, 24 on the heating element 23 reaches a temperature excessively higher than other parts.

Then, the electric igniter 20 for a gas generator configured as described above is measured with a micro-face infrared radiation thermometer (Trade name: Thermomicro 6T04S made by Nippon Denki San'ei) as shown in Fig. 3.

In Fig. 3, the reference numeral 27 is a micro-face infrared radiation thermometer body to which the electric igniter 20 for a gas generator is attached and a constant current power supply 28 is used.

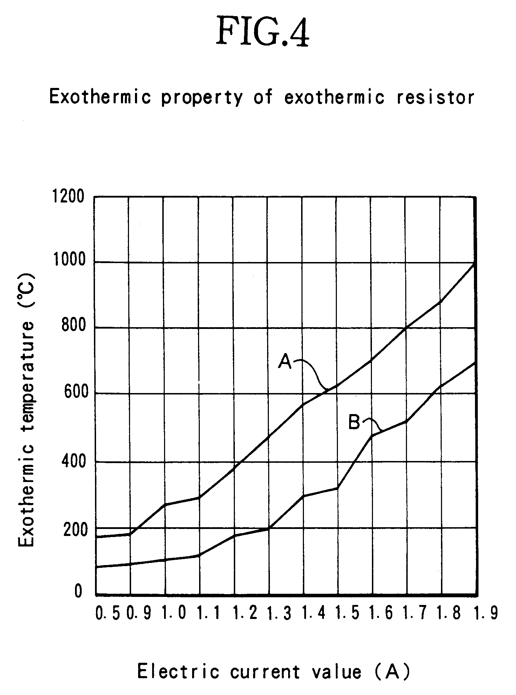

Fig. 4 shows the results obtained.

In Fig. 4, A indicates the exothermic temperatures at the spot 25 between the two trimmings 24, 24 and B indicates the exothermic temperatures at another spot 26 apart from the trimming 24.

As obvious from Fig. 4, changing the electric current value from 0.8 to 1.9A shows a difference of the exothermic temperature in the range of from about 100 to about 320 C° between A and B.

Tricinate which is generally used as an igniting agent of a gas generator has a firing point of about 280 C°. Therefore, it is understood that tricinate reaches its firing point when an electric current is about 1.1A for the spot 25 between the two trimmings 24, 24 according to this embodiment, while it reaches its firing point when an electric current exceeds about 1.4A for the spot 26 apart from the spot 25 between the two trimmings 24, 24 according to this embodiment.

That is to say, this embodiment can ignite tricinate by flowing an electric current of about 1.1A or above, while the ignition of tricinate needs to flow an electric current of about 1.4A or above for the spot 26 apart from the spot 25 between the two trimmings 24, 24 according to this embodiment.

Besides, in order to ignite tricinate 100 percent, a temperature higher than its firing point is required. And, that temperature is determined to be about 630 C°, which can be obtained by flowing an electric current of about 1.5A for the spot according to this embodiment. But, for the spot 26 apart from the spot 25 between the two trimmings 24, 24 according to this embodiment, an electric current of about 1.9A is required to obtain the same temperature.

It is understood from the above that a mere forming of the trimming 24 in the heating element 23 is only to increase the exothermic temperature of the heating element 23 uniformly, while a peculiar heat spot is formed between the two trimmings formed in the heating element 23.

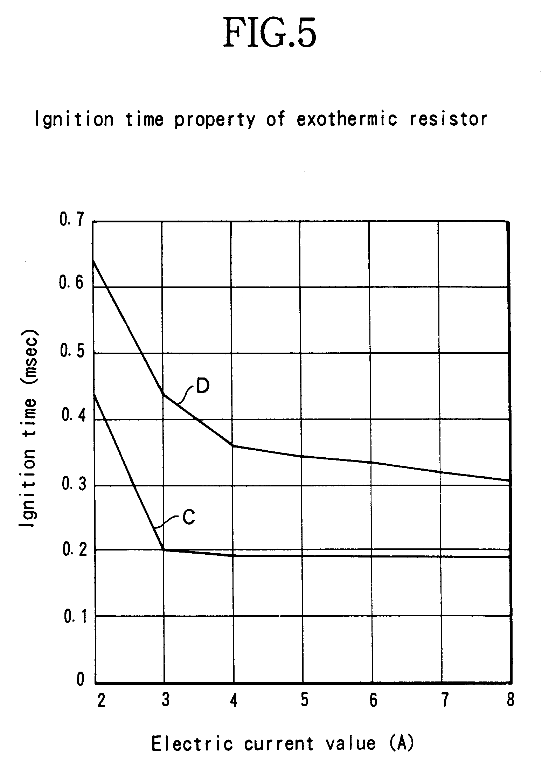

The ignition time of the electric igniter 20 for a gas generator according to this embodiment and that of an electric igniter for a gas generator using a heating element without a trimming were measured. The results obtained are shown in Fig. 5.

In Fig. 5, C represents the electric igniter 20 for a gas generator according to this embodiment and D represents the electric igniter for a gas generator using the heating element without the trimming.

As obvious from Fig. 5, the ignition time of this embodiment was 0.42 msec with the electric current value of 2A and that of the electric igniter for a gas generator using the heating element without the trimming was 0.64 msec with the same electric current value.

That is to say, this embodiment makes it possible to quicken the ignition time by about 0.22 msec with the electric current value of 2A.

Similar results were also obtained with the electric current values of 3 to 4A.

Thus, this embodiment can remarkably shorten the ignition time as compared with the electric igniter for a gas generator using the heating element without the trimming.

Although the above embodiment has been described using the two trimmings 24, the number of trimmings may be three or four as far as a spot can be formed between the trimmings.

And, it is desirable to form the trimming 24 by cutting off nearly halfway in the breadth direction of the heating element 23.

Particularly, when the ignition agent is tricinate which has a particle diameter of 50 to 70 micrometers, forming the trimmings 24 by cutting off nearly halfway in the breadth direction of the heating element 23 enhances the probability that tricinate will be positioned in the spot 25 between the two trimmings 24.

Although the above embodiment has been described using tricinate as the ignition agent, diazodinitrophenol (ignition temperature: about 180 C°), lead thiocyanate (ignition temperature: about 180 C°), Zn/KClO₄ (ignition temperature: about 280 C°), Ti/KClO₄ (ignition temperature: about 400 C°) or the like may also be used.

As described above, as this invention forms at least two trimmings in the breadth direction of the heating element, supplying an electric current to the heating element forms a heat spot, which reaches a higher temperature than other parts, between the trimmings, and the ignition agent disposed atop of the heating spot can be ignited quicker than other parts. Particularly, the heating element can be activated more surely and the gas generator can be activated more quickly even if the power supply from the backup capacitor lasts only a short time.

## Claims

1. An electric igniter for a gas generator wherein a pair of electrodes formed of metallic membrane are disposed at a certain interval on the surface of an insulating thin plate and said electrodes are integrally connected by at least one heating element made of metallic membrane, characterized by forming at least two trimmings in the breadth direction of said heating element from the side of the heating element.

2. An electric igniter for a gas generator according to Claim 1, wherein each trimming is formed by cutting off nearly halfway in the breadth direction of the heating element and a heat spot is formed between said trimmings.

3. An electric igniter for a gas generator according to Claim 1, wherein each trimming is formed by cutting off in parallel nearly halfway in the breadth direction of the heating element from both sides of the heating element.
